# EUROPÄISCHE PATENTSCHRIFT

(11) **EP 0 606 920 B1**
(45) Veröffentlichungstag und Bekanntmachung des Hinweises auf die Patenterteilung: **21.07.1999**
(21) Anmeldenummer: 94100482.2
(22) Anmeldetag: 14.01.1994
(51) Int. Cl.: B64D 11/00

(54) **Flugzeug**
Aircraft
Avion

(30) Priorität: 15.01.1993 DE 4300877
(43) Veröffentlichungstag der Anmeldung: 20.07.1994
(73) Patentinhaber: DaimlerChrysler Aerospace Airbus Gesellschaft mit beschränkter Haftung, 21129 Hamburg (DE)
(72) Erfinder: Claus, Joachim, F-31700 Cornebarrieu (FR); Kutzner, Ingrid, D-21129 Hamburg (DE); Kwik, Harry, D-21035 Hamburg (DE); Lau, Michael, D-21739 Dollern (DE); Müller, Hans-Jürgen, D-24558 Henstedt-Ulzburg (DE); Muin, Andrew, D-21720 Guderhandviertel (DE); Myska, Ralf, D-21149 Hamburg (DE); Schliwa, Ralf, D-21739 Dollern (DE); Schumacher, Markus, D-21614 Buxtehude (DE); Schwertfeger, Günter, F-31170 Tournefeuille (FR)
(74) Vertreter: Hansmann, Dierk, Dipl.-Ing.

(56) Entgegenhaltungen:
- EP-A- 0 035 955
- EP-A- 0 514 650
- FR-A- 1 080 108
- US-A- 4 022 404
- AVIATION WEEK AND SPACE TECHNOLOGY Bd. 136, Nr. 18 , 4. Mai 1992 , NEW-YORK,US Seiten 22 - 23 SMITH 'LARGE TRANSPORT COULD MARK NEW ERA FOR DOUGLAS AIRCRAFT'

## Beschreibung

Die Erfindung betrifft ein Flugzeug mit Versorgungseinrichtungen und sanitären Anlagen, die mindestens teilweise in separaten Versorgungsräumen in einem Passagierraum angeordnet sind und bei dem wenigstens ein Versorgungsraum im Bereich eines Unterflurdecks unterhalb eines den Passagierraum in lotrechter Richtung nach unten begrenzenden Hauptdecks angeordnet ist sowie bei dem das Hauptdeck und das Unterflurdeck über mindestens eine begehbare Verbindungseinrichtung in Form einer Treppe mit Treppenstufen ineinander übergeleitet sind und bei mindestens ein Versorgungsraum im Bereich des Unterflurdecks als ein Toilettenraum ausgebildet ist, in dessen Bereich eine Treppe vorgesehen ist und bei dem ausgehend von einer Flugzeugmittellinie ein Toilettenbecken mit einem geringeren Abstand zu dieser Flugzeugmittellinie als ein Handwaschbecken angeordnet ist, wobei durch die Anordnung von Oberseiten des Handwaschbeckens und des Toilettenbeckens entlang der Außenwandung des Flugzeuges in einer Querschnittfläche senkrecht zur Flugzeuglängsachse eine treppenartige Kontour aufgespannt ist und wobei der Toilettenraum benachbart zu einer Außenwandung des Flugzeuges angeordnet ist.

Versorgungseinrichtungen und sanitäre Anlagen, wie Toilettenanlagen und Bordküchen, werden üblicherweise in der gleichen Ebene innerhalb von Flugzeugen angeordnet, die auch zur Aufstellung von Passagiersitzen und damit zur Unterbringung der Passagiere dient. Ein unterhalb eines diese Ebene ausbildenden Hauptdecks angeordnetes Unterflurdeck dient hingegen ausschließlich zur Beförderung von Gepäck bzw. zur Aufnahme von Hilfseinrichtungen zum Betrieb des Flugzeuges. Die Anordnung der Versorgungseinrichtungen des Hauptdecks führt dazu, daß die Anzahl von Passagiersitzen entsprechend reduziert wird. Darüber hinaus treten Beeinträchtigungen des Reisekomforts dadurch auf, daR beispielsweise vor einer besetzten Toilette wartende Passagiere andere Passagiere behindern, bzw. im betreffenden Bereich eine Unruhe hervorrufen, die das Wohlbefinden der anderen Passagiere stört.

Aus der EP-A-0 514 650, ausgehend von der die Merkmale des Oberbegriffs des Hauptanspruches gebildet wurden, ist bereits ein Flugzeug mit einem Mehrdeckrumpf bekannt. Im Bereich eines Unterdeckes können wahlweise Container mit Luftfracht oder Container für eine Passagierbenutzung angeordnet werden. Zur Ermöglichung eines Zugangs für Container, die durch Passagiere benutzt werden sollen, sind Treppenmodule einsetzbar. Die Passagiercontainer können beispielsweise mit Toiletten, Küchen oder Schlafräumen ausgestattet werden.

Die US-A 4 022 404 zeigt ein weiteres Flugzeug mit einem Mehrdeckrumpf. Es sind insgesamt drei Ebenen vorgesehen, bei denen die mittlere die Hauptpassagierebene darstellt. Eine untere Ebene dient zur Aufnahme von Fracht und in einer zusätzlichen oberen Ebene sind weitere Passagiersitze sowie das Cockpit angeordnet.

Die EP-A-0 035 955 beschreibt ein Flugzeug, bei dem im Bereich des Frachtraumes zusätzliche Wohncontainer angeordnet werden können, in denen Passagiere übernachten können. Innerhalb der Wohncontainer sind hier begehbare Schlafkabinen angeordnet.

Aufgabe der vorliegenden Erfindung ist es, ein Flugzeug der einleitend genannten Art derart zu verbessern, daß der Freiraum bei der Gestaltung und die Nutzung des Hauptdecks erhöht wird.

Diese Aufgabe wird erfindungsgemäß dadurch gelöst, daß der Toilettenraum als ständige Einrichtung fest installiert ist und daß die Treppe mit Treppenstufen in Richtung auf den Bereich dieses Toilettenraums derart wendelförmig angeordnet ist, daß eine Änderung der Begehungsrichtung um etwa 90° realisiert ist.

Durch die Verlagerung des Versorgungsraumes in den Bereich des Unterflurdecks ist es möglich, eine freizügige Nutzung des Hauptdecks durchzuführen. Es ist möglich, eine größere Anzahl von Passagiersitzen aufzustellen und hierdurch die Rentabilität des Betriebes des Flugzeuges zu erhöhen. Insbesondere ist es durch den bezüglich der Wandungsrundung entgegengesetzt geformten seitlichen Bereich einer jeweiligen Raumbegrenzung möglich, Hilfseinrichtungen im Bereich von Bordküchen oder Toiletten, beispielsweise Waschbecken, bedienungsfreundlicher anzuordnen. Bei einer Anordnung im Bereich des Hauptdecks tritt in der Regel das Problem auf, daß der in lotrechter Richtung obere Wandungsbereich näher an einen Benutzer heranreicht, als der in lotrechter Richtung untere Bereich. Hierdurch wird entweder eine unnatürliche Benutzungsposition erzwungen, oder aber der Gestaltungsfreiraum bei der Anordnung der erforderlichen Elemente wird erheblich eingeengt.

Zur Vermeidung einer Belästigung mitreisender Passagiere bei einer Nutzung von sanitären Anlagen ist es vorgesehen , daß mindestens ein Versorgungsraum als ein Toilettenraum ausgebildet ist.

Eine weitere Vergrößerung der nutzbaren Fläche im Bereich des Hauptdecks kann dadurch erfolgen, daß mindestens ein Versorgungsraum als eine Bordküche ausgebildet ist.

Zur Erhöhung des Reisekomforts für die Passagiere bzw. zur Ermöglichung einer ausreichenden Erholung der Flugzeugbesatzung bei längeren Flügen wird vorgeschlagen, daß mindestens ein Versorgungsraum als Schlafraum ausgebildet ist.

Eine weitere Verbesserung der Reisequalität kann dadurch erfolgen, daß mindestens ein Versorgungsraum als Aufenthaltsraum ausgebildet ist. Es ist auch möglich, eine Anwendung als Regenerationsraum oder als Fitnessraum vorzusehen.

Zur weiteren Verbesserung des Anteiles der nutzbaren Fläche wird vorgeschlagen, daß die Treppe mit Treppenstufen derart wendelförmig angeordnet ist, daß eine Änderung einer Begehungsrichtung um etwa 90° realisiert ist.

Eine Vermeidung einer Belästigung von mitreisenden Passagieren durch vor Toilettenräumen wartende Passagiere kann dadurch erfolgen, daß vor dem Versorgungsraum im Unterflurbereich ein Wartebereich angeordnet ist.

Eine relativ zu üblichen Flugzeugkonstruktionen zweckmäßige Gestaltung erfolgt dadurch, daß das Unterflurdeck relativ zum Hauptdeck mit einem Abstand angeordnet ist, der mindestens einer menschlichen Gehhöhe entspricht. Hierdurch erfolgt eine Tieferlegung des Unterflurdecks relativ zu den Konstruktionen gemäß dem Stand der Technik.

Eine hohe gestalterische Freiheit bei der Anordnung der Versorgungsräume sowie eine günstige Ausnutzung des Hauptdecks zur Aufstellung von Passagiersitzen erfolgt dadurch, daß die Verbindungseinrichtung relativ zu einer Außenwandung des Flugzeuges seitlich angeordnet ist.

Eine bezüglich üblicher Benutzungshaltungen günstige Anordnung im Sanitärbereich erfolgt dadurch, daß im Bereich des Toilettenraumes ein Toilettenbecken einer Flugzeugmittellinie zugewandt und ein Handwaschbecken der Außenwandung zugewandt angeordnet ist.

Eine Nutzung von Zwischenräumen kann dadurch erfolgen, daß in der Umgebung des Versorgungsraumes mindestens ein Stauraum angeordnet ist.

Zur Vermeidung unnötig langer Wege zwischen dem Unterflurdeck und dem Hauptdeck bei einer Versorgung der Passagiere durch das Bordpersonal wird vorgeschlagen, daß im Bereich des Hauptdecks mindestens eine mit dem Unterflurdeck in Verbindung stehende Verteilerstation für zu transportierende Gegenstände angeordnet ist.

Ein einfacher Transport von Lasten, beispielsweise von für die Passagiere vorgesehenen Lebensmitteln, kann dadurch erfolgen, daß im Bereich der Verteilerstation ein Lift zum Transport von Servierwagen angeordnet ist.

Eine Verringerung des für die Müllaufbewahrung erforderlichen Volumens erfolgt dadurch, daß im Bereich des Unterflurdecks mindestens ein Müllsammelbehälter mit integrierter Müllaufbereitungsanlage angeordnet ist.

In der Zeichnung sind Ausführungsbeispiele der Erfindung schematisch dargestellt. Es zeigen:
- Fig. 1:: einen Horizontalschnitt durch das Flugzeug im Bereich des Hauptdecks,
- Fig. 2:: einen Horizontalschnitt durch das Flugzeug im Bereich des Unterflurdecks,
- Fig. 3:: eine vergrößerte Darstellung des dem Flugzeugbug zugewandt angeordneten Unterflurbereiches,
- Fig. 4:: einen Querschnitt gemäß Schnittlinie IV-IV in Fig. 3,
- Fig. 5:: eine vergrößerte Darstellung des dem Flugzeugheck zugewandt angeordneten Unterflurbereiches
**und**
- Fig. 6:: eine Querschnittdarstellung gemäß Schnittlinie VI-VI in Fig. 5.

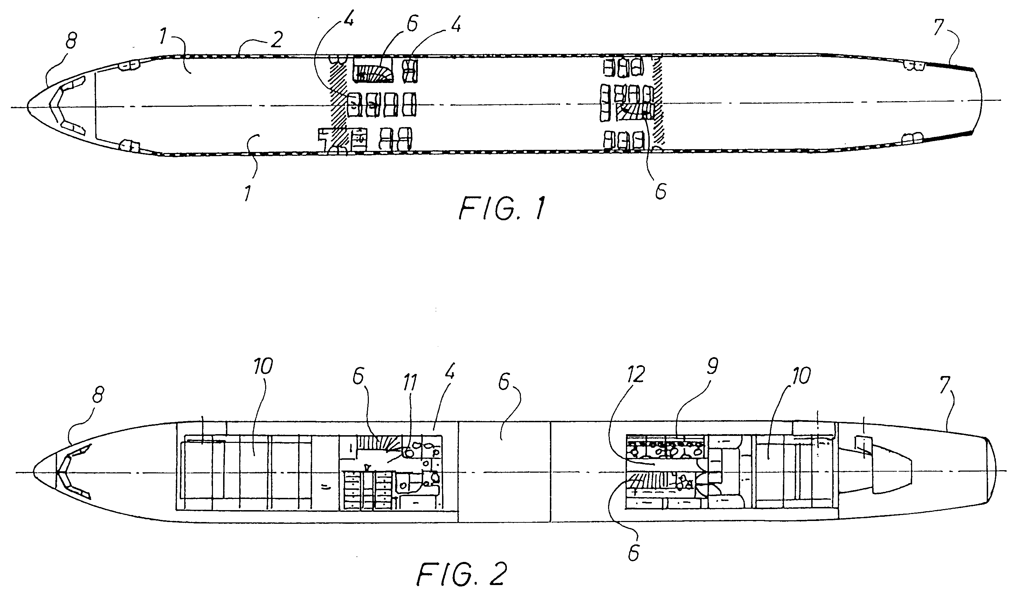

Das Flugzeug gemäß Fig. 1 weist einen Innenraum (1) auf, der von einer Außenwandung (2) umschlossen ist und in horizontaler Richtung durch ein Hauptdeck (3) unterteilt wird. Im Bereich des Hauptdecks (3) sind Passagiersitze (4) angeordnet. Zur Verbindung mit einem in Fig. 2 dargestellten Unterflurdeck (5) sind zwei begehbare Verbindungseinrichtungen (6) vorgesehen. Eine Verbindungseinrichtung (6) ist einem Heck (7) und die an dere Verbindungseinrichtung (6) einem Bug (8) des Flugzeuges zugewandt angeordnet.

Gemäß der Darstellung in Fig. 2 ist insbesondere daran gedacht, Versorgungsräume (9) im Bereich des Unterflurdecks (5) benachbart zu Frachträumen (10) anzuordnen. Darüber hinaus erfolgt eine Anordnung der Versorgungsräume (9) vorzugsweise im Bereich von Türen (11, 12).

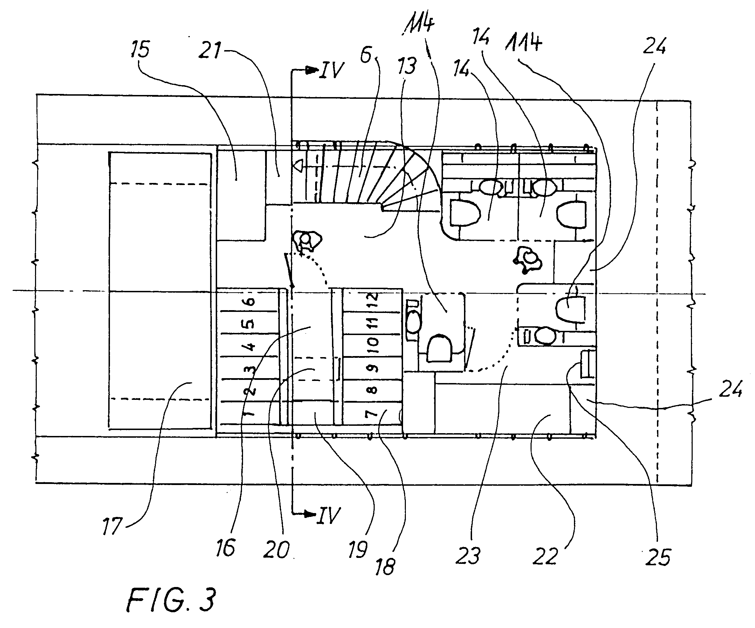

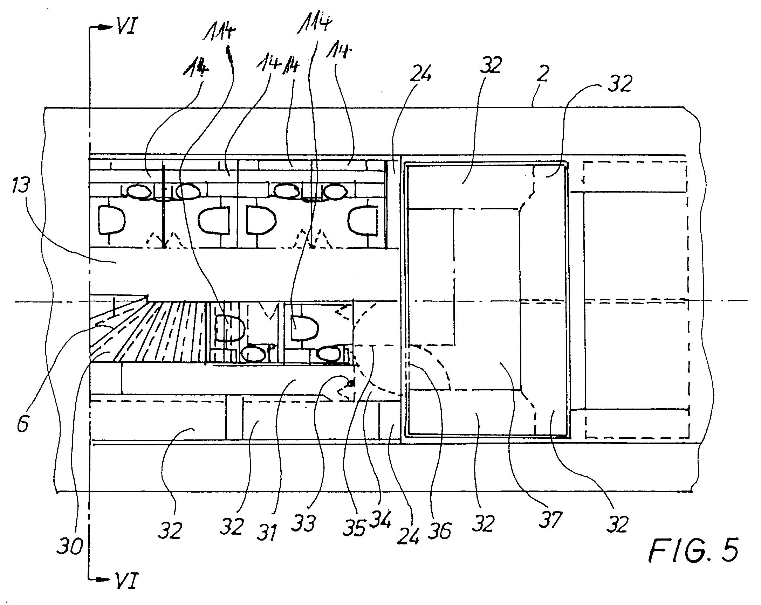

Aus der in Fig. 3 dargestellten vergrößerten Darstellung des dem Bug (8) zugewandten Versorgungsbereiches ist ersichtlich, daß im Anschluß an die als Treppe ausgebildete Verbindungseinrichtung (6) ein Wartebereich (13) vorgesehen ist. Der Wartebereich (13) ist entsprechend einem Flur gestaltet. Vom Wartebereich (13) abzweigend sind zwei Versorgungsräume (9) angeordnet, die als Toilettenräume (14) ausgebildet sind. Innerhalb dieser Versorgungsräume sind Toilettenbecken sowie Waschbecken vorgesehen. Darüber hinaus sind ein Telefonraum (15) sowie eine Unterfluranrichte (16) (Galley) vorgesehen, die ebenfalls vom Wartebereich (13) aus begehbar sind. Anfallender Abfall kann von einem Müllsammelbehälter (17) aufgenommen werden. Ebenfalls sind weitere Toilettenräume (114) vorgesehen.

Für einen Transport von Servierwagen (18) (Trolley) zu einem Lift (19) ist ein Umsetzer (20) vorgesehen. Eine Versorgungseinheit (21) kann benachbart zum Telefonraum (15) angeordnet sein.

Desweiteren sind ein mit einer Liege (22) ausgestatteter Sanitätsraum (23) und Stauräume (24) vorgesehen. Im Bereich des Sanitätsraums (23) ist ein Klappsitz (25) angeordnet.

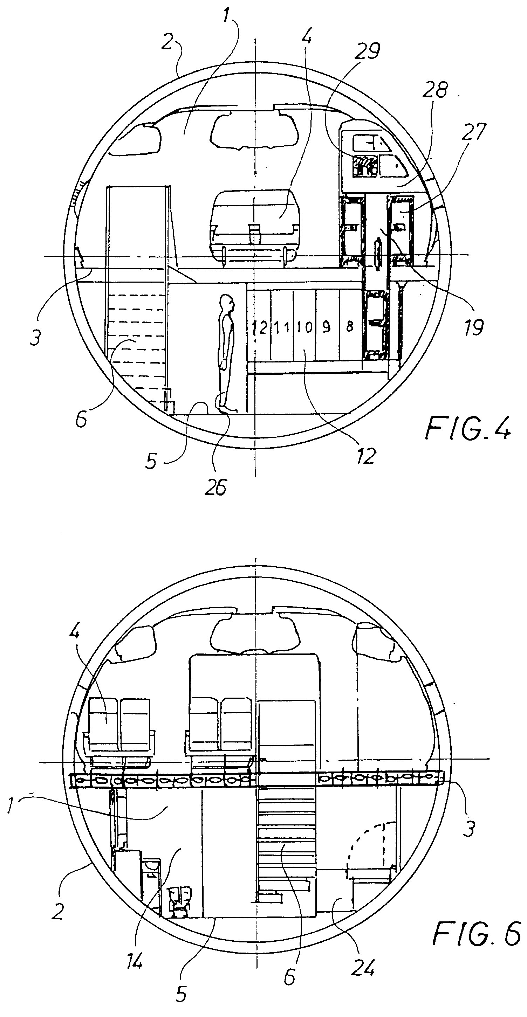

Aus der Querschnittdarstellung in Fig. 4 ist ersichtlich, daß das Unterflurdeck (5) derart tiefer gelegt ist, daß für eine Person (26) eine ausreichende Stehhöhe bereitgestellt wird. Ein Mülltransport erfolgt mit Hilfe eines Müllrollwagens (27). Der Müllrollwagen (27) ist gleichfalls wie die Servierwagen (18) mit Hilfe des Liftes (19) transportierbar. Im Bereich des Hauptdecks (3) ist eine Verteilerstation (28) angeordnet, die zum einen eine Beschickung des Liftes (19) ermöglicht und zum anderen mit Zapfstellen für Verbrauchsmittel, beispielsweise Heiß- und Kaltwasser, ausgestattet ist. Insbesondere ist daran gedacht, im Bereich der Verteilerstation (28) separate Heißwasserbereiter (29) zu installieren.

Aus der in Fig. 5 abgebildeten vergrößerten Darstellung des dem Heck (7) zugewandten Versorgungsbereiches ist ersichtlich, daß die als Treppe ausgebildete Verbindungseinrichtung (6) mit Treppenstufen (30) ausgestattet ist, die wendelförmig eine Richtungsänderung von 90° realisieren. Hierzu sind einige der Treppenstufen (30) als Eckstufen ausgebildet.

Zusätzlich sind in diesem Versorgungsbereich innerhalb eines Ruheraumes (31) Betten (32) angeordnet. Die Ruheräume (31) können wahlweise von der Flugzeugcrew oder von Passagieren benutzt werden. Über eine Falttür (33) erfolgt eine Abtrennung zu einem Vorflur (34), der über eine Tür (35) vom weiteren Bereich abgetrennt ist.

Über einen Schottdurchbruch (36) erfolgt ein Zugang zu einem Aufenthaltsraum (37), der ebenfalls mit Betten (32) ausgestattet ist. Es können beispielsweise nebeneinander angeordnete Betten oder Etagenbetten vorgesehen sein.

Eine zweckmäßige Aufteilung eines Toilettenraumes (14) ist in Fig. 6 dargestellt. Es ist ersichtlich, daß durch eine seitliche Anordnung eines Toilettenbeckens (38) eine gute Zugänglichkeit eines der Außenwandung (2) zugewandt angeordneten Handwaschbeckens (39) gegeben ist und daß insbesondere eine erhebliche Kopffreiheit bei der Benutzung des Handwaschbeckens (39) realisiert ist.

Die als Treppen ausgebildeten Verbindungseinrichtungen (6) werden insbesondere derart seitlich angeordnet, daß eine Änderung der bisherigen Aufteilung der Passagiersitze (4) vermieden wird. Erforderliche Umbauarbeiten werden hierdurch minimiert. Durch die um 90° gewendelte Ausführung der Verbindungseinrichtungen (6) wird im breiter ausgebildeten Eckbereich eine Ausweichfläche bereitgestellt, die es ermöglicht, daß zwei sich begegnende Personen (26) aneinander vorbeigehen können.

Zur Vermeidung von Wartezeiten innerhalb des Wartebereiches (13) ist vorgesehen, im Bereich des Hauptdecks (3) Leuchtanzeigen anzuordnen, die anzeigen, ob die Toilettenräume besetzt oder frei sind.

## Patentansprüche

1. Flugzeug mit Versorgungseinrichtungen und sanitären Anlagen, die mindestens teilweise in separaten Versorgungsräumen (9) in einem Passagierraum angeordnet sind und bei dem wenigstens ein Versorgungsraum (9) im Bereich eines Unterflurdecks (5) unterhalb eines den Passagierraum in lotrechter Richtung nach unten begrenzenden Hauptdecks (3) angeordnet ist sowie bei dem das Hauptdeck (3) und das Unterflurdeck (5) über mindestens eine begehbare Verbindungseinrichtung (6) in Form einer Treppe mit Treppenstufen (30) ineinander übergeleitet sind und bei mindestens ein Versorgungsraum (9) im Bereich des Unterflurdecks (5) als ein Toilettenraum (14) ausgebildet ist, in dessen Bereich eine Treppe vorgesehen ist und bei dem ausgehend von einer Flugzeugmittellinie ein Toilettenbecken mit einem geringeren Abstand zu dieser Flugzeugmittellinie als ein Handwaschbecken (39) angeordnet ist, wobei durch die Anordnung von Oberseiten des Handwaschbeckens (39) und des Toilettenbeckens entlang der Außenwandung (2) des Flugzeuges in einer Querschnittfläche senkrecht zur Flugzeuglängsachse eine treppenartige Kontour aufgespannt ist und wobei der Toilettenraum (14) benachbart zu einer Außenwandung (2) des Flugzeuges angeordnet ist, dadurch gekennzeichnet, daß der Toilettenraum (14) als ständige Einrichtung fest installiert ist und daß die Treppe mit Treppenstufen (30) in Richtung auf den Bereich dieses Toilettenraums derart wendelförmig angeordnet ist, daß eine Änderung der Begehungsrichtung um etwa 90° realisiert ist.

2. Flugzeug nach Anspruch 1, dadurch gekennzeichnet, daß mindestens ein Versorgungsraum (9) als eine Bordküche ausgebildet ist.

3. Flugzeug nach Anspruch 1 oder 2, dadurch gekennzeichnet, daß mindestens ein Versorgungsraum (9) als Schlafraum ausgebildet ist.

4. Flugzeug nach einem der Ansprüche 1 bis 3, dadurch gekennzeichnet, daß mindestens ein Versorgungsraum (9) als Aufenthaltsraum ausgebildet ist.

5. Flugzeug nach einem der Ansprüche 1 bis 4, dadurch gekennzeichnet, daß vor dem Versorgungsraum (9) im Unterflurbereich ein Wartebereich (13) angeordnet ist.

6. Flugzeug nach einem der Ansprüche 1 bis 5, dadurch gekennzeichnet, daß das Unterflurdeck (5) relativ zum Hauptdeck (3) mit einem Abstand angeordnet ist, der mindestens einer menschlichen Gehhöhe entspricht.

7. Flugzeug nach einem der Ansprüche 1 bis 6, dadurch gekennzeichnet, daß die Verbindungseinrichtung (6) relativ zur Außenwandung (2) des Flugzeuges seitlich angeordnet ist.

8. Flugzeug nach einem der Ansprüche 1 bis 7, dadurch gekennzeichnet, daß in der Umgebung des Ver-sorgungsraumes (9) mindestens ein Stauraum (24) angeordnet ist.

9. Flugzeug nach einem der Ansprüche 1 bis 8, dadurch gekennzeichnet, daß im Bereich des Hauptdecks (3) mindestens eine mit dem Unterflurdeck (5) in Verbindung stehende Verteilerstation (28) für zu transportierende Gegenstände angeordnet ist.

10. Flugzeug nach einem der Ansprüche 1 bis 9, dadurch gekennzeichnet, daß im Bereich der Verteilerstation (28) ein Lift (19) zum Transport von Servierwagen (18) angeordnet ist.

11. Flugzeug nach einem der Ansprüche 1 bis 10, dadurch gekennzeichnet, daß im Bereich des Unterflurdecks (5) mindestens ein Müllsammelbehälter (17) mit integrierter Müllaufbereitungsanlage angeordnet ist.

## Claims

1. An aeroplane with utility devices and sanitary installations, which are arranged at least partially in separate utility compartments (9) in a passenger cabin and in which at least one utility compartment (9) is arranged in the region of a lower deck (5) beneath a main deck (3) defining the bottom of the passenger cabin in the vertical direction, and in which the main deck (3) and the lower deck (5) are linked via at least one walkable connection means (6) in the form of a staircase with steps (30), and at least one utility compartment (9) is constructed as a toilet compartment (14) in the region of the lower deck (5), in the region of which a staircase is provided and in which, proceeding from a centre line of the aeroplane, a toilet bowl is arranged at a shorter distance from said aeroplane centre line than a hand basin (39), a stair-like contour being formed as a result of the arrangement of the upper sides of the hand basin (39) and the toilet bowl along the outer wall (2) of the aeroplane in a plane of cross section perpendicular to the aeroplane longitudinal axis, and the toilet compartment (14) being arranged adjacent an outer wall (2) of the aeroplane, characterised in that the toilet compartment (14) is fixedly installed as a permanent installation and the staircase is arranged with steps (3) spiralling in the direction of the region of said toilet compartment in such a manner that a change in the direction of walking of approximately 90° is realised.

2. An aeroplane according to claim 1, characterised in that at least one utility compartment (9) is constructed as a galley.

3. An aeroplane according to claim 1 or 2, characterised in that at least one utility compartment (9) is constructed as a sleeping compartment.

4. An aeroplane according to one of claims 1 to 3, characterised in that at least one utility compartment (9) is constructed as a waiting room.

5. An aeroplane according to one of claims 1 to 4, characterised in that a waiting area (13) is arranged in front of the utility compartment (9) in the lower deck region.

6. An aeroplane according to one of claims 1 to 5, characterised in that the lower deck (5) is arranged at a distance from the main deck (3) at least corresponding to the height of a human when standing.

7. An aeroplane according to one of claims 1 to 6, characterised in that the connection means (6) is arranged laterally relative to the outer wall (2) of the aeroplane.

8. An aeroplane according to one of claims 1 to 7, characterised in that at least one storage compartment (24) is arranged in the vicinity of the utility compartment (9).

9. An aeroplane according to one of the claims 1 to 8, characterised in that at least one distribution station (28) for objects which are to be transported, which communicates with the lower deck (5), is arranged in the region of the main deck (3).

10. An aeroplane according to one of claims 1 to 9, characterised in that a lift (19) for transporting serving trolleys (18) is arranged in the region of the distribution station (28).

11. An aeroplane according to one of claims 1 to 10, characterised in that at least one refuse collecting receptacle (17) with an integrated refuse processing device is arranged in the region of the lower deck (5).

## Revendications

1. Avion comprenant communs et installations sanitaires aménagées dans la cabine de passagers et divisés au moins en partie en dépendances (9) séparées, dans lequel au moins une dépendance (9) est disposée dans la zone d'un pont inférieur (5) en dessous d'un pont principal (3) limitant la cabine de passagers verticalement vers le bas, dans lequel le pont principal (3) et le pont inférieur (5) communiquent par au moins un dispositif de communication (6) praticable sous la forme d'un escalier constitué de marches (30) et dans lequel au moins une dépendance (9) prévue dans la zone du pont inférieur (5) est conçue en tant que toilettes (14), un escalier étant prévu à proximité de cette dépendance dans laquelle une cuvette de toilettes est, partant d'une ligne médiane de l'avion, disposée à une plus petite distance de cette ligne médiane de l'avion que le lavabo (39), étant entendu que, grâce à la disposition des faces supérieures du lavabo (39) et de la cuvette des toilettes le long de la paroi extérieure (2) de l'avion dans une aire de la section transversale perpendiculaire à l'axe longitudinal de l'avion, un profil en forme d'escalier est obtenu et étant entendu que les toilettes (14) sont disposées à proximité d'une paroi extérieure de l'avion, caractérisé en ce que les toilettes (14) sont fixées comme installation permanente et en ce que l'escalier constitué de marches (30) est agencé en spirale en direction de la zone de ces toilettes de sorte que la direction de passage peut être modifiée d'environ 90°.

2. Avion suivant la revendication 1, caractérisé en ce qu'au moins une dépendance (9) est conçue comme une cuisine de bord.

3. Avion suivant la revendication 1 ou 2, caractérisé en ce qu'au moins une dépendance (9) est conçue comme une cabine à couchettes.

4. Avion suivant l'une quelconque des revendications 1 à 3, caractérisé en ce qu'au moins une dépendance (9) est conçue comme une salle de séjour.

5. Avion suivant l'une quelconque des revendications 1 à 4, caractérisé en ce qu'une zone d'attente (13) est prévue avant la dépendance (9) dans la zone du pont inférieur.

6. Avion suivant l'une quelconque des revendications 1 à 5, caractérisé en ce que le pont inférieur (5) est séparé du pont principal (3) d'une distance qui correspond au moins à la taille d'un homme.

7. Avion suivant l'une quelconque des revendications 1 à 6, caractérisé en ce que le dispositif de communication (6) est disposé latéralement à la paroi extérieure (2) de l'avion.

8. Avion suivant l'une quelconque des revendications 1 à 7, caractérisé en ce qu'à proximité de la dépendance (9) est prévue au moins une soute (24).

9. Avion suivant l'une quelconque des revendications 1 à 8, caractérisé en ce que dans la zone du pont principal (3) est prévu au moins un poste de répartition (28) relié au pont inférieur (5) pour les objets à transporter.

10. Avion suivant l'une quelconque des revendications 1 à 9, caractérisé en ce qu'un élévateur (19) est disposé dans la zone du poste de répartition (28) pour le transport de tables-dessertes à roulettes (18).

11. Avion suivant l'une quelconque des revendications 1 à 10, caractérisé en ce que dans la zone du pont inférieur (5) est disposé au moins un réservoir à ordures (17) dans lequel est intégrée une installation pour le traitement des ordures.
